# EUROPEAN PATENT APPLICATION

(11) **EP 4 772 367 A1**
(43) Date of publication of application: **08.07.2026**
(21) Application number: 24876107.4
(22) Date of filing: 24.06.2024
(51) Int. Cl.: B60K 1/02, B60K 7/00, B60K 11/02, B60K 17/08, B60L 50/62

(54) **DISTRIBUTED DRIVE SYSTEM OF VEHICLE AND DRIVE ASSEMBLY**

(30) Priority: 08.10.2023 CN 202311295981
(71) Applicant: Dongfeng Motor Group Co., Ltd, Wuhan, Hubei 430056 (CN)
(72) Inventor: LEI, Jun, Wuhan, Hubei 430056 (CN); GUO, Zhenge, Wuhan, Hubei 430056 (CN); FU, Li, Wuhan, Hubei 430056 (CN); ZHAO, Shichao, Wuhan, Hubei 430056 (CN); MENG, Bin, Wuhan, Hubei 430056 (CN)
(74) Representative: Valet Patent Services Limited
(86) International application number: PCT/CN2024/100991
(87) International publication number: WO 2025/077284

(57) **Abstract**

A distributed drive system (10) comprises a first drive system (100) and a second drive system (200). The first drive system (100) comprises a first drive motor (110) and a first transmission assembly (120). The first drive motor (110) drives, through the first transmission assembly (120), a first wheel (11) of a vehicle to rotate. The second drive system (200) comprises a second drive motor (210) and a second transmission assembly (220). The second drive motor (210) drives, through the second transmission assembly (220), a second wheel (12) of the vehicle to rotate. The first wheel (11) and the second wheel (12) are located at the same drive axle. The first transmission assembly (120) comprises a first oil churning member (121). The first oil churning member (121) can splash, through rotation, an engine oil onto the first drive motor (110). The second transmission assembly (220) comprises a second oil churning member (221). The second oil churning member (221) can splash, through rotation, the engine oil onto the second drive motor (210). A drive assembly applying the above distributed drive system is further provided, which has a more compact structure, and the occupied space is reduced.

## Description

### TECHNICAL FIELD

The invention relates to the field of vehicle drive systems, and in particular to a distributed drive system and drive assembly for a vehicle.

### BACKGROUND

A distributed drive system refers to a drive system that drives different wheels respectively through independent and distinct drive motors. Torques output by various drive motors of such drive system may be not coupled with one other, so that the torque output by each drive motor can be independently controlled according to driving force requirement of each wheel, and differential steering of the vehicle can also be realized by controlling different rotational speeds of the wheels. In a related distributed drive system, different wheels are driven by different in-wheel motors. Such distributed drive system has a structure that is not compact enough and requires a large space.

### SUMMARY

The invention provides a distributed drive system and a drive assembly for a vehicle, for solving a technical problem of how to make a structure of the distributed drive system more compact, thereby reducing an occupied space of the distributed drive system.

An embodiment of the invention provides a distributed drive system for a vehicle, the distributed drive system including: a first drive system, the first drive system including a first drive motor and a first transmission assembly, the first drive motor driving a first wheel of the vehicle to rotate through the first transmission assembly; a second drive system, the second drive system including a second drive motor and a second transmission assembly, the second drive motor driving a second wheel of the vehicle to rotate through the second transmission assembly; wherein the first wheel and the second wheel are located on the same drive shaft, the first transmission assembly includes a first oil churning member, the first oil churning member being capable of splashing engine oil onto the first drive motor through rotation, the second transmission assembly includes a second oil churning member, the second oil churning member being capable of splashing engine oil onto the second drive motor through rotation.

Further, an output shaft of the first drive motor and an output shaft of the second drive motor are coaxial, the first output shaft and the second output shaft are coaxial, the first oil churning member is located below the first drive motor, and the second oil churning member is located below the second drive motor.

Further, the first transmission assembly includes: a first gear and a first output shaft, the first gear being fixed to the first output shaft, the first output shaft being connected to the first drive motor through the first gear, the first output shaft being connected to the first wheel, the first gear being located below the first drive motor to form the first oil churning member; the second transmission assembly includes: a second gear and a second output shaft, the second gear being fixed to the second output shaft, the second output shaft being connected to the second drive motor through the second gear, the second output shaft being connected to the second wheel, the second gear being located below the second drive motor to form the second oil churning member.

Further, the first transmission assembly further includes: a first intermediate shaft and a third gear, the first intermediate shaft being located between the first drive motor and the first output shaft in a vertical direction, the first intermediate shaft being connected to the first drive motor, the third gear being fixed to the first intermediate shaft and meshed with the first gear; the second transmission assembly further includes: a second intermediate shaft and a fourth gear, the second intermediate shaft being located between the second drive motor and the second output shaft in the vertical direction, the second intermediate shaft being connected to the second drive motor, the fourth gear being fixed to the second intermediate shaft and meshed with the second gear; wherein, in a horizontal direction, the third gear is located at one side of the first gear, the fourth gear is located at one side of the second gear, and the horizontal direction is perpendicular to the vertical direction.

Further, the first transmission assembly includes a first planetary gear train, the first planetary gear train being connected to the first drive motor and to the first wheel, the first planetary gear train being located below the first drive motor, an outer ring gear of the first planetary gear train forming the first oil churning member; the second transmission assembly includes a second planetary gear train, the second planetary gear train being connected to the second drive motor and to the second wheel, the second planetary gear train being located below the second drive motor, an outer ring gear of the second planetary gear train forming the second oil churning member.

Further, the output shaft of the first drive motor and the output shaft of the second drive motor are disposed in parallel and spaced apart from one another, an axis of the output shaft of the first drive motor and an axis of the output shaft of the second drive motor are located in a same horizontal plane, the horizontal plane being a plane perpendicular to the vertical direction; in the horizontal direction, the first oil churning member is located at one side of the first drive motor, the second oil churning member is located at one side of the second drive motor, and the horizontal direction is perpendicular to the vertical direction.

Further, the first transmission assembly further includes a first transmission gear train, the first oil churning member being connected to the first transmission gear train and spaced apart from a transmission gear in the first transmission gear train; the second transmission assembly further includes a second transmission gear train, the second oil churning member being connected to the second transmission gear train and spaced apart from a transmission gear in the second transmission gear train.

Further, the distributed drive system further includes a connecting shaft, the connecting shaft connecting the first drive system and the second drive system; the connecting shaft is provided with a connection structure capable of switching between a first state and a second state, when the connection structure is in the first state, torque cannot be transmitted between the first drive system and the second drive system through the connecting shaft, and when the connection structure is in the second state, torque can be transmitted between the first drive system and the second drive system through the connecting shaft.

Further, the connecting shaft connects the output shaft of the first drive motor and the output shaft of the second drive motor, or the connecting shaft connects the first transmission assembly and the second transmission assembly.

An embodiment of the invention further provides a drive assembly for a vehicle, the drive assembly including: a range extender assembly, configured to charge a power battery of the vehicle; an in-wheel motor, configured to drive wheels of a front drive axle of the vehicle; and the distributed drive system as described above, configured to drive wheels of a rear drive axle of the vehicle.

An embodiment of the invention provides a distributed drive system for a vehicle, the distributed drive system including a first drive system with a first drive motor and a first transmission assembly, and a second drive system with a second drive motor and a second transmission assembly. The first drive motor drives a first wheel to rotate through the first transmission assembly, the second drive motor drives a second wheel to rotate through the second transmission assembly, and the first wheel and the second wheel are located on a same drive axle. Wherein, the first transmission assembly is provided with a first oil churning member, the first oil churning member can splash an engine oil onto the first drive motor through rotation, the second transmission assembly is provided with a second oil churning member, the second oil churning member can splash an engine oil onto the second drive motor through rotation. It can be understood that, by disposing the first drive motor and the first transmission assembly to be in a same cavity and share a same oil circuit, and disposing the second drive motor and the second transmission assembly to be in a same cavity and share a same oil circuit, the oil splashed by the first oil churning member of the first transmission assembly can be used to cool a stator of the first drive motor, and the oil splashed by the second oil churning member of the second transmission assembly can be used to cool a stator of the second drive motor. There is no need to additionally arrange a cooling system for the first drive motor and the second drive motor, so that the structure of the distributed drive system is more compact, and the occupied space of the distributed drive system is reduced.

### BRIEF DESCRIPTION OF DRAWINGS

FIG. 1 is a schematic structural diagram of a distributed drive system for a vehicle according to an embodiment of the invention;
FIG. 2 is a schematic diagram showing a relative relationship between a first oil churning member and a third gear in the distributed drive system for the vehicle according to an embodiment of the invention;
FIG. 3 is a schematic structural diagram of another distributed drive system for a vehicle according to an embodiment of the invention;
FIG. 4 is an assembly schematic diagram of a first planetary gear train, a first drive motor and a second wheel in the distributed drive system for the vehicle according to an embodiment of the invention;
FIG. 5 is a schematic structural diagram of another distributed drive system for a vehicle according to an embodiment of the invention;
FIG. 6 is a schematic structural diagram of another distributed drive system for a vehicle according to an embodiment of the invention;
FIG. 7 is a schematic structural diagram of another distributed drive system for a vehicle according to an embodiment of the invention;
FIG. 8 is a schematic structural diagram of a drive assembly for a vehicle according to an embodiment of the invention.

### Descriptions of reference numerals

1, drive assembly; 10, distributed drive system; 11, first wheel; 12, second wheel; 100, first drive system; 110, first drive motor; 120, first transmission assembly; 121, first oil churning member; 122, first gear; 123, first output shaft; 124, first intermediate shaft; 125, third gear; 126, first planetary gear train; 1261, sun gear; 1262, planet gear; 1263, planet carrier; 1264, outer ring gear; 127, first transmission gear train; 200, second drive system; 210, second drive motor; 220, second transmission assembly; 221, second oil churning member; 222, second gear; 223, second output shaft; 224, second intermediate shaft; 225, fourth gear; 226, second planetary gear train; 227, second transmission gear train; 300, connecting shaft; 310, connection structure.

### DETAILED DESCRIPTION

To make the objectives, technical solutions and advantages of the invention clearer, the invention is described in further detail below with reference to the accompanying drawings and embodiments. It should be understood that the specific embodiments described herein are only for explaining the invention and are not intended to limit the invention.

Various specific technical features described in the specific embodiments may be combined in any suitable manner without conflict, for example, different embodiments and technical solutions may be formed by combining different specific technical features. To avoid unnecessary repetition, various possible combinations of specific technical features in the invention are not described separately.

In the following description, the terms "first/second/ ..." are only used to distinguish different objects and do not imply that the objects have the same or related relationship. It should be understood that the orientation descriptions such as "above", "below", "outer", and "inner" refer to orientations in a normal use state, and directions such as "left" and "right" refer to left and right directions shown in corresponding specific schematic diagrams, which may or may not be the left and right directions in the normal use state.

It should be noted that the terms "comprise", "include", or any other variation thereof are intended to cover a non-exclusive inclusion, such that a process, method, article, or apparatus that comprises a list of elements includes not only those elements but also other elements not expressly listed, or elements inherent to such process, method, article, or apparatus. Without further limitation, an element defined by the phrase "comprising a ..." does not preclude the presence of additional identical elements in the process, method, article, or apparatus that comprises the element. The term "connected" includes both direct connection and indirect connection unless otherwise specified.

In the following embodiments, a distributed drive system can be applied to any type of vehicle. Exemplarily, the distributed drive system can be applied to cars as well as trucks; the distributed drive system can be applied to some of drive axles of a vehicle. Exemplarily, the distributed drive system is applied to a front drive axle of a vehicle, and the distributed drive system can also be applied to a rear drive axle of a vehicle. For ease of description, a structure of the distributed drive system is exemplarily described below by taking an application of the distributed drive system to a rear drive axle of a car as an example.

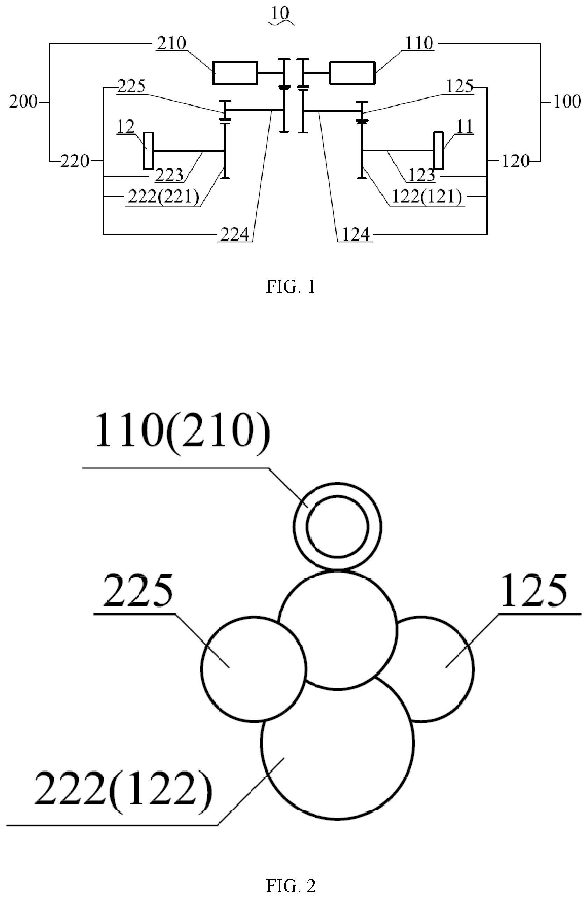

In some embodiments, as shown in FIG. 1, the distributed drive system 10 includes: a first drive system 100 and a second drive system 200. The first drive system 100 includes a first drive motor 110 and a first transmission assembly 120. The first drive motor 110 drives, through the first transmission assembly 120, a first wheel 11 of the vehicle to rotate. The second drive system 200 includes a second drive motor 210 and a second transmission assembly 220. The second drive motor 210 drives, through the second transmission assembly 220, a second wheel 12 of the vehicle to rotate. The first wheel 11 and the second wheel 12 are located at a same drive axle. Exemplarily, the drive axle is a rear axle, and thus the first wheel 11 is located at a left side of the rear axle, and the second wheel 12 is located at a right side of the rear drive axle. It can be understood that the first drive motor 110 and the second drive motor 210 independently control, respectively through the first transmission assembly 120 and the second transmission assembly 220, left and right wheels of the rear drive axle, to achieve a distributed driving of the rear drive axle.

Optionally, the first transmission assembly 120 includes a first oil churning member 121, and the first oil churning member 121 can splash, through rotation, an engine oil onto the first drive motor 110, that is, the first transmission assembly 120 can also drive the first oil churning member 121 to rotate in a process of transmitting a torque of the first drive motor 110 to the first wheel 11. Specifically, the first transmission assembly 120 and the first drive motor 110 are accommodated in a same housing, and the first oil churning member 121 can stir the engine oil contained at a bottom of the housing through rotation to splash the engine oil, so that the engine oil can be splashed onto the first drive motor 110, and in turn the stator of the first drive motor 110 is cooled by a splashed engine oil. The second transmission assembly 220 includes a second oil churning member 221. The second oil churning member 221 can splash an engine oil onto the second drive motor 210 through rotation. That is, the second transmission assembly 220 can also drive the second oil churning member 221 to rotate in a process of transmitting a torque of the second drive motor 210 to the second wheel 12. Specifically, the second transmission assembly 220 and the second drive motor 210 are accommodated in the same housing, and the second oil churning member 221 can stir the engine oil contained at the bottom of the housing through rotation to splash the engine oil, so that the engine oil can be splashed onto the second drive motor 210, and in turn a stator of the second drive motor 210 is cooled by the splashed engine oil. It can be understood that, by disposing the first drive motor 110 and the first transmission assembly 120 to be in a same cavity and share a same oil circuit, and disposing the second drive motor 210 and the second transmission assembly 220 to be in a same cavity and share a same oil circuit, an oil splashed by the first oil churning member 121 of the first transmission assembly 120 can be used to cool a stator of the first drive motor 110, and an oil splashed by the second oil churning member 221 of the second transmission assembly 220 can be used to cool a stator of the second drive motor 210. There is no need to additionally arrange a cooling system for the first drive motor 110 and the second drive motor 210, so that the structure of the distributed drive system 10 is more compact, and the occupied space of the distributed drive system 10 is reduced. It should be noted that the first oil churning member 121 is located at any position where the engine oil can be splashed onto the first drive motor 110 through oil splashing. Exemplarily, the first oil churning member 121 may be located directly below the first drive motor 110, or may be located at a side of the first drive motor 110 and make the first drive motor 110 located in a tangential direction of rotation of the first oil churning member 121. Exemplarily, the second oil churning member 221 may be located directly below the second drive motor 210, or may be located at a side of the second drive motor 210 and make the second drive motor 210 located in a tangential direction of rotation of the second oil churning member 221.

Optionally, as shown in FIG. 1, in a width direction of the vehicle, the first wheel 11 and the first drive motor 110 are located at a same side, and the second wheel 12 and the second drive motor 210 are located at a same side, so that the first oil churning member 121 of the first transmission assembly 120 can be located close to the first drive motor 110, and meanwhile the first transmission assembly 120 is connected to the first wheel 11 close to the first drive motor 110; the second oil churning member 221 of the second transmission assembly 220 can be located close to the second drive motor 210, and meanwhile the second transmission assembly 220 is connected to the second wheel 12 close to the second drive motor 210, so that a structure of the distributed drive system 10 is more compact.

An embodiment of the invention provides a distributed drive system for a vehicle. The distributed drive system includes a first drive system with a first drive motor and a first transmission assembly, and a second drive system with a second drive motor and a second transmission assembly. The first drive motor drives a first wheel to rotate through the first transmission assembly, and the second drive motor drives a second wheel to rotate through the second transmission assembly. The first wheel and the second wheel are located at a same drive axle. The first transmission assembly is provided with a first oil churning member. The first oil churning member can splash an engine oil onto the first drive motor through rotation. The second transmission assembly is provided with a second oil churning member. The second oil churning member can splash an engine oil onto the second drive motor through rotation. It can be understood that, by disposing the first drive motor and the first transmission assembly to be in a same cavity and share a same oil circuit, and disposing the second drive motor and the second transmission assembly to be in a same cavity and share a same oil circuit, an oil splashed by the first oil churning member of the first transmission assembly can be used to cool a stator of the first drive motor, and an oil splashed by the second oil churning member of the second transmission assembly can be used to cool a stator of the second drive motor. There is no need to additionally arrange a cooling system for the first drive motor and the second drive motor 210, so that the structure of the distributed drive system is more compact, and the occupied space of the distributed drive system is reduced.

In some embodiments, as shown in FIG. 1, an output shaft of the first drive motor 110 and the output shaft of the second drive motor 210 are coaxial and collinear. The first oil churning member 121 is located below the first drive motor 110, and the second oil churning member 221 is located below the second drive motor 210, and thus in a state where the two drive motors are arranged coaxially and collinearly, the engine oil can be splashed to the bottoms of the first drive motor 110 and the second drive motor 210 through the oil splashing of the oil churning members. It should be noted that, after the engine oil is splashed onto the stator of the motor, the engine oil will drip downward under the action of gravity, resulting in a small amount of engine oil flowing through the bottom of the stator of the motor. By arranging the oil churning members below the motor, the engine oil is directly splashed to the bottom of the motor, so that the cooling capacity for the bottom of the stator of the motor is improved.

In some embodiments, as shown in FIG. 1, the first transmission assembly 120 includes: a first gear 122 and a first output shaft 123. The first gear 122 is fixed to the first output shaft 123. The first output shaft 123 is connected to the first drive motor 110 through the first gear 122, and the first output shaft 123 is connected to the first wheel 11, that is, the first drive motor 110 is meshed with the first gear 122 through a transmission structure to transmit torque to the first output shaft 123, enabling the first output shaft 123 to drive the first wheel 11 to rotate. Meanwhile, the first gear 122, located at one side of the second drive motor 210, forms the first oil churning member 121. It can be understood that, in the horizontal direction, the first gear 122 is spaced apart from the second drive motor 210, and a portion of the first gear 122 is located within the engine oil contained at the bottom of the housing, so that the first gear 122, while transmitting a torque of the first drive motor 110 to the first output shaft 123, can splash the engine oil onto the first drive motor 110 through rotation. That is, the first gear 122 capable of transmitting torque is rotated to splash oil, so that the first gear 122 has both the functions of transmitting torque and splashing engine oil onto the first drive motor 110, and thus there is no need to additionally arrange other oil churning structures. Meanwhile, the second transmission assembly 220 includes: a second gear 222 and a second output shaft 223. The second gear 222 is fixed to the second output shaft 223. The second output shaft 223 is connected to the second drive motor 210 through the second gear 222. The second output shaft 223 is connected to the second wheel 12. That is, the second drive motor 210 is meshed with the second gear 222 through a transmission structure to transmit torque to the second output shaft 223, so that the second output shaft 223 can drive the second wheel 12 to rotate. Meanwhile, the second gear 222, located at one side of the second drive motor 210, forms the second oil churning member 221. It can be understood that, in the horizontal direction, the second gear 222 is spaced apart from the second drive motor 210, and a portion of the second gear 222 is located within the engine oil contained at the bottom of the housing, so that the second gear 222 can splash the engine oil onto the second drive motor 210 through rotation while transmitting the torque of the second drive motor 210 to the second output shaft 223. That is, the second gear 222 capable of transmitting torque rotates to splash oil, so that the second gear 222 has both the functions of transmitting torque and splashing engine oil onto the second drive motor 210, and thus there is no need to additionally arrange other oil churning structures. In summary, the first gear 122 and the second gear 222, while transmitting torques, can also splash an engine oil onto the first drive motor 110 and the second drive motor 210 through oil splashing. Thus, there is no need to additionally arrange oil churning members, and the first gear 122 and the second gear 222 serve as the first oil churning member 121 and the second oil churning member 221 respectively to realize a cooling of the first drive motor 110 and the second drive motor 210, thereby further improving a structural compactness of the distributed drive system 10.

In some embodiments, as shown in FIG. 1, the first transmission assembly 120 further includes: a first intermediate shaft 124 and a third gear 125. The first intermediate shaft 124 is located between the first drive motor 110 and the first output shaft 123. The first intermediate shaft 124 is connected to the first drive motor 110. The third gear 125 is fixed to the first intermediate shaft 124 and meshed with the first gear 122. That is, a power from the first drive motor 110 can be transmitted to the first intermediate shaft 124, and the first intermediate shaft 124 can transmit a power from the first intermediate shaft 124 to the first output shaft 123 through the meshing of the third gear 125 and the first gear 122. That is, the power of the first drive motor 110 is transmitted to the first output shaft 123 through the first intermediate shaft 124 disposed between the first output shaft 123 and the first drive motor 110, and the meshing between the third gear 125 and the first gear 122. Meanwhile, as shown in FIG. 2, in the horizontal direction, the third gear 125 is located at one side of the first gear 122, that is, the third gear 125 is not located directly above the first gear 122, so that the third gear 125 can not only transmit a power to the first output shaft 123, but also reduce the blocking effect of the third gear 125 on the engine oil splashed by the first gear 122, and thus the engine oil splashed by the first gear 122 can be more smoothly splashed onto the first drive motor 110.

The second transmission assembly 220 further includes: a second intermediate shaft 224 and a fourth gear 225. The second intermediate shaft 224 is located between the second drive motor 210 and the second output shaft 223. The second intermediate shaft 224 is connected to the second drive motor 210. The fourth gear 225 is fixed to the second intermediate shaft 224 and meshed with the second gear 222. That is, a power from the second drive motor 210 can be transmitted to the second intermediate shaft 224, and the second intermediate shaft 224 can transmit the power from the second intermediate shaft 224 to the second output shaft 223 through the meshing of the fourth gear 225 and the second gear 222. That is, the power of the second drive motor 210 is transmitted to the second output shaft 223 through the second intermediate shaft 224 disposed between the second output shaft 223 and the second drive motor 210, and the meshing between the fourth gear 225 and the second gear 222. Meanwhile, as shown in FIG. 2, in the horizontal direction, the fourth gear 225 is located at one side of the second gear 222, that is, the fourth gear 225 is not located directly above the second gear 222, so that the fourth gear 225 can not only transmit power to the second output shaft 223, but also reduce the blocking effect of the fourth gear 225 on the engine oil splashed by the second gear 222, and thus the engine oil splashed by the second gear 222 can be more smoothly splashed onto the second drive motor 210.

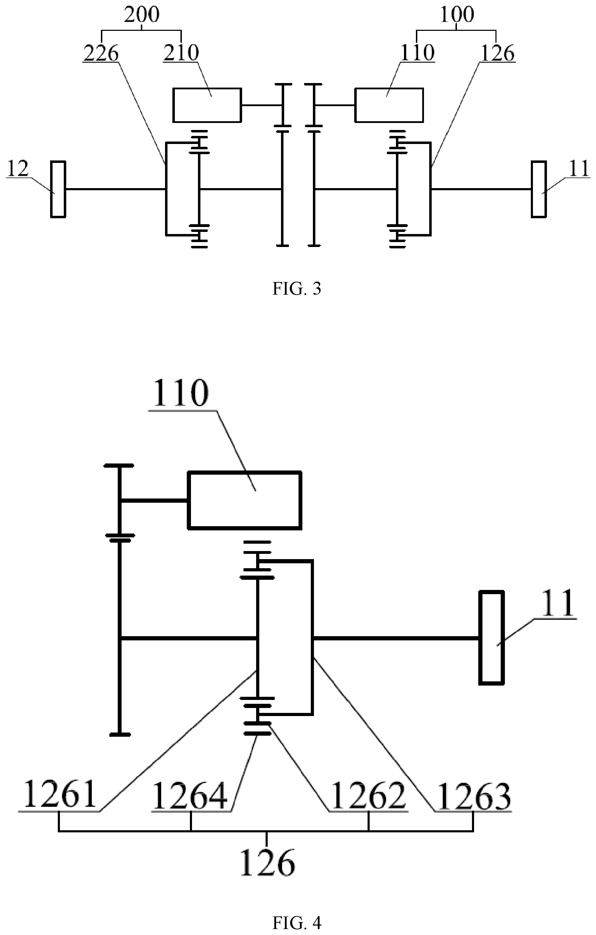

In some embodiments, as shown in FIG. 3, the first transmission assembly 120 includes a first planetary gear train 126. The first planetary gear train 126 is connected to the first drive motor 110 and to the first wheel 11. In the horizontal direction, the first planetary gear train 126 is located at one side of the first drive motor 110. An outer ring gear of the first planetary gear train 126 forms the first oil churning member 121, that is, the first planetary gear train 126 can transmit the torque of the first drive motor 110 to the first wheel 11, and at the same time, can splash oil through the rotation of the outer ring gear of the first planetary gear train 126, so that the engine oil is splashed onto the first drive motor 110. The second transmission assembly 220 includes a second planetary gear train 226. The second planetary gear train 226 is connected to the second drive motor 210 and to the second wheel 12. In the horizontal direction, the second planetary gear train 226 is located at one side of the second drive motor 210, and an outer ring gear of the second planetary gear train 226 forms the second oil churning member 221, that is, the second planetary gear train 226 can transmit the torque of the second drive motor 210 to the second wheel 12, and at the same time, can splash oil through the rotation of the outer ring gear of the second planetary gear train 226, so that the engine oil is splashed onto the second drive motor 210. Moreover, torque transmission through the planetary gear train can also make the structure of the transmission assembly more compact while reducing speed and increasing torque, further reducing the size of the distributed drive system 10.

The motion relationship of various portions of the first planetary gear train 126 and the second planetary gear train 226 can realize speed reduction and torque increase and enable the outer ring gear to rotate. The specific structure and motion relationship of various portions of the first planetary gear train 126 will be exemplarily described below. The motion relationship of various portions of the second planetary gear train 226 is the same as that of the first planetary gear train 126. As shown in FIG. 4, the first planetary gear train 126 includes: a sun gear 1261, a planet gear 1262, a planet carrier 1263 and an outer ring gear 1264. The sun gear 1261 is connected to the first drive motor 110. A rotation about own axis of the planet gear 1262 is limited and the planet gear 1262 can revolve around the sun gear 1261. The outer ring gear 1264 can rotate under the driving of a revolution of the planet gear 1262, and the planet carrier 1263 is connected to the first wheel 11.

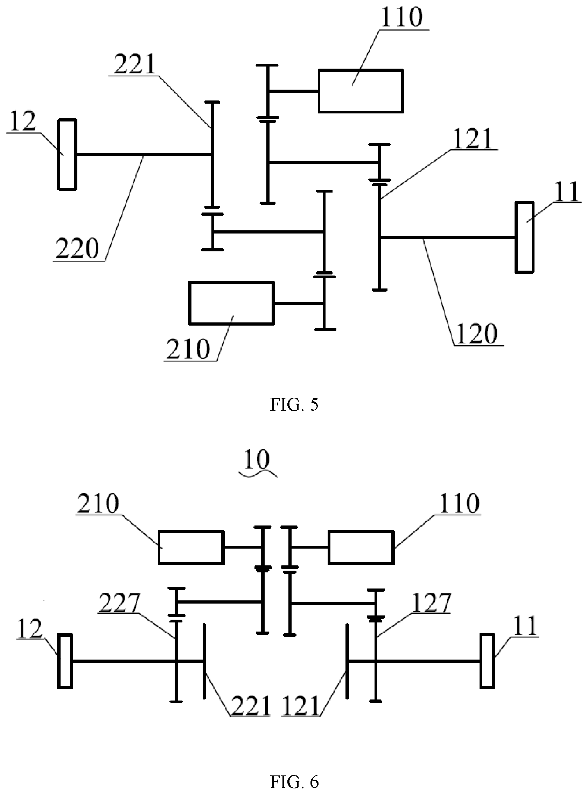

In some embodiments, as shown in FIG. 5, the output shaft of the first drive motor 110 and the output shaft of the second drive motor 210 are disposed in parallel and spaced apart from each other. An axis of the output shaft of the first drive motor 110 and an axis of the output shaft of the second drive motor 210 are located in a same horizontal plane, which is a plane perpendicular to the vertical direction. That is, the first drive motor 110 and the second drive motor 210 are spaced apart in the horizontal direction, and the output shafts of the first drive motor 110 and the second drive motor 210 are parallel. Meanwhile, in the horizontal direction, the first oil churning member 121 is located at one side of the first drive motor 110, and the second oil churning member 221 is located at one side of the second drive motor 210. It can be understood that the first transmission assembly 120 and the second transmission assembly 220 are spaced apart in the horizontal direction, and the first oil churning member 121 is located at one side of the first drive motor 110 in the horizontal direction, and the second oil churning member 221 is located at one side of the second drive motor 210 in the horizontal direction. Thus, while the first oil churning member 121 can splash an engine oil onto the first drive motor 110 through rotation and the second oil churning member 221 can splash an engine oil onto the second drive motor 210 through rotation, the size of the distributed drive system 10 in the height direction can also be reduced, so that the distributed drive system 10 can be applied to a skateboard-type vehicle chassis.

In some embodiments, as shown in FIG. 6, the first transmission assembly 120 further includes a first transmission gear train 127. The first transmission gear train 127 connects the first drive motor 110 and the first wheel 11. The first oil churning member 121 is connected to the first transmission gear train 127 and spaced apart from the gears in the first transmission gear train 127. It can be understood that the first drive motor 110 transmits power to the first wheel 11 through the first transmission gear train 127. The first oil churning member 121 is an oil churning structure independent of a transmission gear in the first transmission gear train 127. The first oil churning member 121 is only used to splash an engine oil onto the first drive motor 110 through oil splashing, and does not need to participate in the power transmission of the first transmission gear train 127, so that the arrangement position of the first oil churning member 121 is more flexible. The second transmission assembly 220 further includes a second transmission gear train 227. The second transmission gear train 227 connects the second drive motor 210 and the second wheel 21. The second oil churning member 221 is connected to the second transmission gear train 227 and spaced apart from the gears in the second transmission gear train 227. It can be understood that the second drive motor 210 transmits power to the second wheel 12 through the second transmission gear train 227. The second oil churning member 221 is an oil churning structure independent of a transmission gear in the second transmission gear train 227. The second oil churning member 221 is only used to splash an engine oil onto the second drive motor 210 through oil splashing, and does not need to participate in the power transmission of the second transmission gear train 227, so that the arrangement position of the second oil churning member 221 is more flexible.

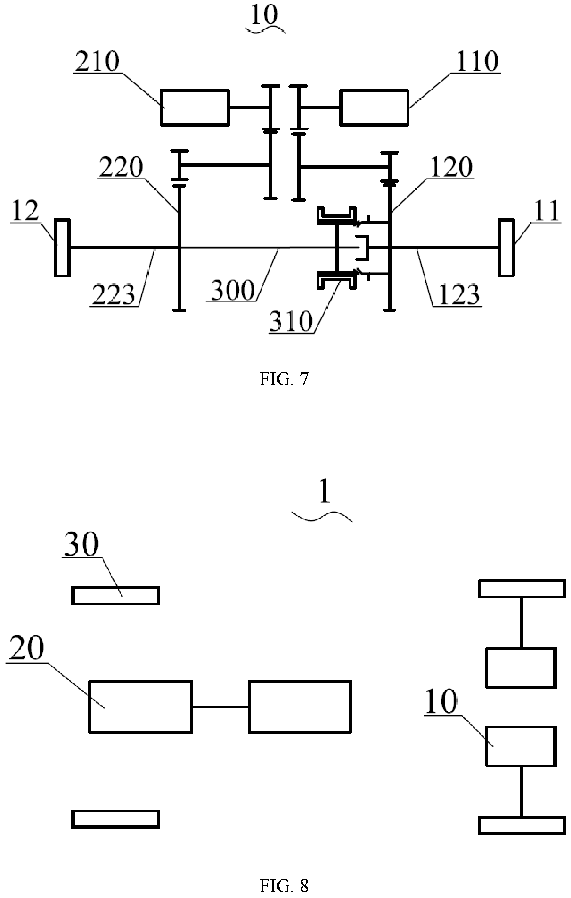

In some embodiments, as shown in FIG. 7, the distributed drive system 10 further includes a connecting shaft 300. The connecting shaft 300 connects the first drive system 100 and the second drive system 200. The connecting shaft 300 is provided with a connection structure 310 capable of switching between a first state and a second state. When the connection structure is in the first state, a torque cannot be transmitted between the first drive system 100 and the second drive system 200 through the connecting shaft 300. When the connection structure 310 is in the second state, torque can be transmitted between the first drive system 100 and the second drive system 200 through the connecting shaft 300. It can be understood that, by connecting the first drive system 100 and the second drive system 200 through the connecting shaft 300, during a normal driving of the vehicle, the connection structure 310 is in the first state, and torque cannot be transmitted between the first drive system 100 and the second drive system 200 through the connecting shaft 300, that is, the torques of the first drive system 100 and the second drive system 200 are in a decoupled state, thereby achieving distributed driving of the vehicle. When one of the first wheel and the second wheel of the vehicle is in a slipping state, causing the vehicle to be unable to drive, a state of the connection structure 310 is switched to the second state. At this time, torque can be transmitted between the first drive system 100 and the second drive system 200 through the connecting shaft 300, that is, the torques of the first drive system 100 and the second drive system 200 are coupled, so that the torques output by the first drive motor 110 and the second drive motor 210 can be coupled and then transmitted to the first wheel 11 and the second wheel 12, thereby improving an obstacle crossing ability of the vehicle. In a condition that one of the first drive motor 110 and the second drive motor 210 of the vehicle fails and cannot operate, the state of the connection structure 310 is switched to the second state. At this time, the normally operating drive motor can transmit torque to the failed drive system through the connecting shaft 300, to drive the first wheel 11 and the second wheel 12 to rotate at the same time. Meanwhile, the vehicle alarms to notify the driver of the drive motor failure and a speed of the vehicle is limited, that is, a limp-home function of the vehicle is realized. The connecting shaft 300 can be connected to different parts of the first drive system 100 and the second drive system 200, so that the first drive system 100 and the second drive system 200 can transmit torque to each other. Optionally, as shown in FIG. 6, the connecting shaft 300 connects the first output shaft 123 and the second output shaft 223. Optionally, the connecting shaft 300 connects the output shaft of the first drive motor 110 and the output shaft of the second drive motor 210.

It should be noted that the connection structure 310 can be any structure capable of realizing and interrupting the power transmission between the first drive system 100 and the second drive system 200. Exemplarily, the connection structure 310 is a clutch. In a condition that the clutch is disengaged, the connection structure 310 is in the first state, and the torque cannot be transmitted between the first drive system 100 and the second drive system 200 through the connecting shaft 300. When the clutch is in an engaged state, the connection structure 310 is in the second state, and torque can be transmitted between the first drive system 100 and the second drive system 200 through the connecting shaft 300. Exemplarily, the connection structure 310 is a coupling sleeve. In a condition that the coupling sleeve is disengaged, the coupling sleeve idles and the connection structure 310 is in the first state, and thus a torque cannot be transmitted between the first drive system 100 and the second drive system 200 through the connecting shaft 300. In a condition that the coupling sleeve is engaged, the coupling sleeve can drive the connecting shaft 300 to rotate and the connection structure 310 is in the second state, and thus the torque can be transmitted between the first drive system 100 and the second drive system 200 through the connecting shaft 300.

An embodiment of the invention further provides a drive assembly for a vehicle, the drive assembly is applied to a range-extended hybrid vehicle, and one of the drive axles of the vehicle adopts a distributed drive system.

In some embodiments, as shown in FIG. 8, the drive assembly 1 includes: a range extender assembly 20, an in-wheel motor 21, and the distributed drive system 10. The range extender assembly 20 is an assembly capable of driving a generator to generate electricity through the operation of an engine, and is configured to charge a power battery of the vehicle. The in-wheel motor 21 is configured to obtain electric energy from the power battery and drive wheels of a front drive axle of the vehicle. The distributed drive system 10 has a structure as shown in any one of FIG. 1 to FIG. 7, and is configured to drive wheels of a rear drive axle of the vehicle. It can be understood that the front drive axle of the vehicle is driven by the in-wheel motor 21, which provides an installation space for the range extender assembly 20 disposed in a front cabin of the vehicle. Meanwhile, the arrangement of the range extender assembly 20 can also provide electric energy for the vehicle and extend a driving range of the vehicle.

The above are only preferred embodiments of the invention, and are not intended to limit the protection scope of the invention.

## Claims

1. A distributed drive system for a vehicle, **characterized by** comprising:
a first drive system comprising a first drive motor and a first transmission assembly, the first drive motor driving, through the first transmission assembly, a first wheel of the vehicle to rotate;
a second drive system comprising a second drive motor and a second transmission assembly, the second drive motor driving, through the second transmission assembly, a second wheel of the vehicle to rotate;
wherein the first wheel and the second wheel are located at a same drive shaft, and the first transmission assembly comprises a first oil churning member, the first oil churning member through rotation being capable of splashing an engine oil onto the first drive motor; and wherein the second transmission assembly comprises a second oil churning member, the second oil churning member through rotation being capable of splashing the engine oil onto the second drive motor.

2. The distributed drive system according to claim 1, wherein an output shaft of the first drive motor and an output shaft of the second drive motor are coaxial, a first output shaft and a second output shaft being coaxial, the first oil churning member being located below the first drive motor, the second oil churning member being located below the second drive motor.

3. The distributed drive system according to claim 2, wherein the first transmission assembly comprises: a first gear and the first output shaft, the first gear being fixed to the first output shaft, the first output shaft being connected to the first drive motor through the first gear, the first output shaft being connected to the first wheel, the first gear being located below the first drive motor to form the first oil churning member;
the second transmission assembly comprises: a second gear and the second output shaft, the second gear being fixed to the second output shaft, the second output shaft being connected to the second drive motor through the second gear, the second output shaft being connected to the second wheel, the second gear being located below the second drive motor to form the second oil churning member.

4. The distributed drive system according to claim 3, wherein the first transmission assembly further comprises: a first intermediate shaft and a third gear, the first intermediate shaft being located between the first drive motor and the first output shaft in a vertical direction, the first intermediate shaft being connected to the first drive motor, the third gear being fixed to the first intermediate shaft and meshed with the first gear;
the second transmission assembly further comprises: a second intermediate shaft and a fourth gear, the second intermediate shaft being located between the second drive motor and the second output shaft in the vertical direction, the second intermediate shaft being connected to the second drive motor, the fourth gear being fixed to the second intermediate shaft and meshed with the second gear;
wherein, in a horizontal direction, the third gear is located at one side of the first gear, the fourth gear being located at one side of the second gear, the horizontal direction being perpendicular to the vertical direction.

5. The distributed drive system according to claim 2, wherein the first transmission assembly comprises a first planetary gear train, the first planetary gear train being connected to the first drive motor and to the first wheel, the first planetary gear train being located below the first drive motor, an outer ring gear of the first planetary gear train forming the first oil churning member;
the second transmission assembly comprises a second planetary gear train, the second planetary gear train being connected to the second drive motor and to the second wheel, the second planetary gear train being located below the second drive motor, an outer ring gear of the second planetary gear train forming the second oil churning member.

6. The distributed drive system according to claim 1, wherein an output shaft of the first drive motor and an output shaft of the second drive motor are disposed in parallel and spaced apart from one another, an axis of the output shaft of the first drive motor and an axis of the output shaft of the second drive motor being located in a same horizontal plane, the horizontal plane being a plane perpendicular to a vertical direction;
in a horizontal direction, the first oil churning member is located at one side of the first drive motor, the second oil churning member being located at one side of the second drive motor, the horizontal direction being perpendicular to the vertical direction.

7. The distributed drive system according to claim 2 or 6, wherein the first transmission assembly further comprises a first transmission gear train, the first oil churning member being connected to the first transmission gear train and spaced apart from a transmission gear in the first transmission gear train;
the second transmission assembly further comprises a second transmission gear train, the second oil churning member being connected to the second transmission gear train and spaced apart from a transmission gear in the second transmission gear train.

8. The distributed drive system according to claim 7, wherein the distributed drive system further comprises a connecting shaft, the connecting shaft connecting the first drive system and the second drive system;
the connecting shaft is provided with a connection structure capable of switching between a first state and a second state, and wherein when the connection structure is in the first state, a torque is not able to be transmitted between the first drive system and the second drive system through the connecting shaft, and when the connection structure is in the second state, the torque is able to be transmitted between the first drive system and the second drive system through the connecting shaft.

9. The distributed drive system according to claim 8, wherein the connecting shaft connects the output shaft of the first drive motor and the output shaft of the second drive motor.

10. The distributed drive system according to claim 8, wherein the connecting shaft connects the first transmission assembly and the second transmission assembly.

11. The distributed drive system according to claim 1, wherein the first drive motor and the first transmission assembly are disposed in a same cavity and share a same oil circuit, and the first oil churning member of the first transmission assembly rotates in a transmission state to churn an oil and splash the oil onto a stator of the first drive motor for cooling;
the second drive motor and the second transmission assembly are disposed in a same cavity and share a same oil circuit, and the second oil churning member of the second transmission assembly rotates in a transmission state to churn an oil and splash the oil onto a stator of the second drive motor for cooling.

12. The distributed drive system according to claim 11, wherein the first drive motor is located in a tangential direction of rotation of the first oil churning member;
the second drive motor is located in a tangential direction of rotation of the second oil churning member.

13. The distributed drive system according to claim 1, 11 or 12, wherein the first oil churning member is one of gears in the first transmission assembly;
the second oil churning member is one of gears in the second transmission assembly.

14. A drive assembly for a vehicle, **characterized in that** the drive assembly comprises:
a range extender assembly configured to charge a power battery of the vehicle;
an in-wheel motor configured to drive wheels of a front drive axle of the vehicle; and
the distributed drive system according to any one of claims 1 to 13, configured to drive wheels of a rear drive axle of the vehicle.
